# EUROPÄISCHE PATENTSCHRIFT

(11) **EP 4 211 360 B1**
(45) Veröffentlichungstag und Bekanntmachung des Hinweises auf die Patenterteilung: **04.06.2025**
(21) Anmeldenummer: 21820248.9
(22) Anmeldetag: 30.11.2021
(51) Int. Cl.: F16C 33/37, F16C 33/372

(54) **WÄLZLAGER SOWIE ZWISCHENSTÜCK HIERFÜR**
ROLLING BEARING AND SPACING BODY THEREFORE
ROULEMENT ET ELEMENT INTERCALAIRE POUR UN TEL ROULEMENT

(30) Priorität: 30.11.2020 DE 102020131634
(43) Veröffentlichungstag der Anmeldung: 19.07.2023
(73) Patentinhaber: Liebherr-Components Biberach GmbH, 88400 Biberach an der Riß (DE)
(72) Erfinder: ALTMAYER, Thomas, 88484 Gutenzell-Hürbel (DE); SCHIERHOLZ, Lennart, 88400 Biberach an der Riß (DE)
(74) Vertreter: Thoma, Michael
(86) Internationale Anmeldenummer: PCT/EP2021/083576
(87) Internationale Veröffentlichungsnummer: WO 2022/112600

(56) Entgegenhaltungen:
- DE-A1- 102015 223 511
- FR-A1- 2 343 922
- JP-A- 2001 214 930
- JP-A- 2002 173 951

## Beschreibung

Die vorliegende Erfindung betrifft ein Wälzlager mit zwei konzentrischen Laufringen, zwischen denen in einem Lagerspalt eine Vielzahl von Wälzkörpern vorgesehen sind, die auf zumindest zwei Laufbahnen abwälzen, wobei zwischen den Wälzkörpern Zwischenstücke vorgesehen sind, die die Wälzkörper voneinander beabstandet halten.

Um die Wälzkörper eines Wälzlagers voneinander beabstandet zu halten und in Laufrichtung gleichmäßig verteilt anzuordnen, werden üblicherweise Zwischenstücke oder Wälzkörperkäfige eingesetzt. Werden beispielsweise Wälzkörper in Form von Kugeln eingesetzt, sind die Zwischenstücke üblicherweise Zylinderstücke, deren Stirnseiten etwa halbkugelförmige Einwölbungen bzw. muldenförmig sind, sodass sich ein jeweiliges Zwischenstück mit den stirnseitigen Mulden an voraus- und nachlaufende Kugeln schmiegen kann, vgl. beispielsweise WO 2019/048251 A1.

Dabei wird der zylindrische Ringabschnitt des Zwischenstücks üblicherweise durch Verbindungsstreben mit einem Zentralabschnitt verbunden, so wie dies beispielsweise in den Schriften DE 10 2015 223 511 A1, FR 23 43 922 A1 und JP 2002 173 951 A, oder auch im "Produktkatalog Großwälzlager" der Firma Liebherr gezeigt ist. Die genannten Verbindungsstreben bilden dort zusammen mit dem Zentralabschnitt und dem Ringabschnitt die stirnseitigen Mulden aus. Alternativ kann aber auch eine geschlossenwandige Mulde vorgesehen sein, wie dies schematisch die WO 2019/048251 A1 zeigt.

Je nach Wälzkörperform können die genannten Zwischenstücke abweichend bzw. an die Wälzkörperform angepasst konturiert sein, wobei beispielsweise bei Zylinderrollen an die Zylinderform angepasste, stirnseitige Mulden ausgebildet sein können.

Durch solche herkömmlichen Zwischenstücke wird relativ viel Platz im Lager bzw. Lagerspalt eingenommen, sodass für den in das Lager einzubringenden Schmierstoff relativ wenig Platz zur Verfügung steht. Beispielsweise bei Großwälzlagern mit einer Lebensdauerschmierung, wie sie beispielsweise die Schrift WO 2019/201662 A1 zeigt, wird der Schmierstoff üblicherweise im Lagerspalt gespeichert. Dabei ist nicht nur der vom Zwischenstück selbst benötigte Platz der einlagerbaren Schmierstoffmenge abträglich, sondern es kommt auch zu dem Problem, dass sich in den Mulden des Zwischenstücks altes Fett ablagert, wodurch die Versorgung der Wälzkörper mit frischem Schmierstoff beeinträchtigt ist.

Mehr Raum für den Schmierstoff steht bei Verwendung von Wälzkörperkäfigen zur Verfügung. Solche Wälzkörperkäfige können beispielsweise bei einem Drehlager einen Ring bilden, in dem unter gleichmäßiger Teilung Ausnehmungen für die Wälzkörper vorgesehen sind, sodass jeder Wälzkörper vom Wälzkörperkäfig umgriffen und benachbarte Wälzkörper durch einen entsprechenden Steg voneinander beabstandet sind.

Nachteilig an solchen Wälzkörperkäfigen ist jedoch der Umstand, dass die Laufbahnen im Querschnitt betrachtet an ihren Rändern verkürzt werden, da die Wälzkörperkäfige an der Schnittstelle zwischen den beiden Laufbahnen Platz benötigen, sodass der benötigte Spalt zwischen zwei benachbarten Laufbahnen eine gewisse Dicke benötigt, um die seitlichen Ränder des Wälzkörperkäfigs aufnehmen zu können. Der Wälzkörperkäfig läuft üblicherweise in einer Ebene senkrecht zur Hauptabstützrichtung des Wälzlagers, also bei einem Axiallager beispielsweise in einer Ebene senkrecht zur Drehrichtung und bei einem Radiallager entlang einer Zylinderfläche zwischen Außen- und Innenring.

Besonders bei Großwälzlagern, aber auch bei anderen hochbelasteten Wälzlagern kann eine Verkürzung der Querschnittserstreckung der Laufbahnen an deren Rändern zu einem sogenannten Kantentragen führen, das heißt unmittelbar an den verkürzten Kanten treten sehr hohe punktuelle Belastungen zwischen Wälzkörper und Laufbahn auf. Beispielsweise bei Kugellagern schmiegen sich die Laufbahnen hochbelasteter Lager im Querschnitt betrachtet an sich relativ weit an die jeweilige Halbkugelform an. Werden die Ränder dieser Laufbahnen aber aus besagtem Grund zur Anordnung der Wälzkörperkäfige verkürzt, nimmt die Tragfähigkeit ab und es kann zu besagtem Kantentragen kommen, was zu erhöhtem Verschleiß oder gar Beschädigungen führen kann.

Hinzu kommt, dass bei Wälzkörperkäfigen auch die Zahl der verwendbaren Wälzkörper sinkt, was wiederum zu Lasten der Tragfähigkeit des Lagers geht.

Der vorliegenden Erfindung liegt daher die Aufgabe zugrunde, ein verbessertes Wälzlager der genannten Art, insbesondere ein Großwälzlager, zu schaffen, das Nachteile des Standes der Technik vermeidet und letzteren in vorteilhafter Weise weiterbildet. Insbesondere sollen die Wälzkörper in reibungsarmer und platzsparender Weise auf Abstand gehalten werden und eine umfassende, dauerhafte Schmierung des Lagers ermöglicht werden.

Erfindungsgemäß wird die genannte Aufgabe durch ein Wälzlager gemäß Anspruch 1 gelöst. Bevorzugte Ausgestaltungen der Erfindung sind Gegenstand der abhängigen Ansprüche.

Es wird also vorgeschlagen, die Wälzkörper durch Zwischenstücke auf Abstand zu halten, die eine volumenreduzierte und damit platzschaffende Struktur besitzen. Durch das verringerte Bauteilvolumen des Zwischenstücks kann eine erhöhte Menge an Schmierstoff in den Lagerspalt eingebracht bzw. dort eingelagert und gleichzeitig die Ablagerung alten Schmierstoffs vermieden werden, sodass in der Nähe des Wälzkontakts eine bessere Ölabgabe des Schmierstoffs in den belasteten Kontakt erreicht bzw. insgesamt eine bessere Versorgung der Wälzkörper mit frischen Schmierstoff erzielt werden kann.

Nach einem Aspekt der vorliegenden Erfindung ist der Ring- oder Außenrahmenabschnitt des Zwischenstücks, der über Streben mit dem Zentralabschnitt verbunden ist, als Stab- oder Skelettstruktur mit fenster- und/oder türbogenartigen Ausnehmungen ausgebildet. Durch die Verwendung eines fachwerkartigen Außenrahmens anstelle eines herkömmlichen Vollmaterialrings kann gerade auch im Bereich zu den Laufbahnen hin mehr Schmierstoff eingelagert und die Versorgung der Kontaktstellen zwischen Wälzkörper und Laufbahnen mit Schmierstoff verbessert werden. Die genannten Ausnehmungen oder Durchbrechungen können als Schmierstofftaschen wirken, in denen Schmierstoff in unmittelbarer Nähe der Wälzkörper bereitgehalten werden kann.

In vorteilhafter Weiterbildung der Erfindung können die genannten Ausnehmungen der Stab- oder Skelettstruktur des Außenrahmens bzw. -ringabschnitts jeweils zu einer Axialseite des Zwischenstücks hin offen ausgebildet und von einem U-förmigen Rahmenabschnitt, insbesondere in Form eines U-förmigen Stegrahmens, eingefasst sein. Insbesondere kann der Außenrahmen bzw. -ring des Zwischenstücks eine burgzinnenartige Konfiguration besitzen, bei der vorzugsweise stegförmige Materialabschnitte mit stirnseitig offenen Ausnehmungen abwechseln, wenn das Zwischenstück in Umfangsrichtung betrachtet wird. Hierdurch kann im Bereich der Ausnehmungen Schmierstoff eingelagert und zu den Kontaktstellen zwischen Wälzkörper und Laufbahn abgegeben werden.

Vorteilhafterweise kann der Ringabschnitt bzw. Rahmenteil des Zwischenstücks zu gegenüberliegenden Axialseiten hin offene Ausnehmungen aufweisen, sodass zu jeder Axial- bzw. Stirnseite hin offene Ausnehmungen vorgesehen sind.

Die zu gegenüberliegenden Seiten hin offenen Ausnehmungen können grundsätzlich in Laufrichtung betrachtet einander überdeckend angeordnet sein, beispielsweise durch H-förmige Einfassungen gebildet bzw. eingefasst sein.

Vorteilhafterweise können die zu gegenüberliegenden Axialseiten hin offenen Ausnehmungen aber auch zueinander versetzt angeordnet sein, sodass in Umfangsrichtung betrachtet abwechselnd zu unterschiedlichen Axialseiten hin offene Ausnehmungen im Ringabschnitt vorgesehen sein können.

Insbesondere können die Ausnehmungen abwechselnd zu gegenüberliegenden Axialseiten hin offen sein und von Randstegen eingefasst sein, die eine in Umfangsrichtung mäanderförmige Skelettstruktur bilden. Mit einer solchen mäanderförmigen Skelettstruktur kann eine konstruktive Elastizität erzielt werden, die einerseits das jeweilige Zwischenstück vor Verkippen bewahrt, gleichzeitig aber einen erhöhten Reibungswiderstand vermeidet.

Um möglichst viel Schmierstoff in den Lagerspalt einbringen zu können, kann das Verhältnis von Materialabschnitten zu Ausnehmungen im äußeren Rahmen bzw. Ringabschnitt relativ klein bemessen sein. Vorteilhafterweise können die Materialabschnitte des Ringabschnitts bzw. Rahmenteils weniger als 50% oder weniger als 30% oder auch weniger als 20% der ringförmigen Hüllfläche bilden, die umfangsseitig den Ringabschnitt des Zwischenstücks einschließlich dessen Ausnehmungen umschließt. Mit anderen Worten können die "Knochen" des Ringskeletts weniger als die Hälfte oder auch weniger als ¼ der ringförmigen Hüllfläche ausmachen bzw. in Beschlag nehmen.

Im Bereich des Ringabschnitts kann mehr Material ausgespart sein als für die Skelettstruktur verblieben ist. Der Ring- oder Außenrahmenabschnitt kann mehr Durchbrechungen als Skelettknochen besitzen.

Vorteilhafterweise kann die genannte Skelettstruktur aus im Wesentlichen gleichbleibend dünnen und/oder länglichen Stab- oder Knochenabschnitten bestehen, die miteinander verbunden sind und gemeinsam die genannte Skelettstruktur bilden.

In Weiterbildung der Erfindung kann der Ringabschnitt bzw. der äußere Rahmenteil des Zwischenstücks zu beiden axialen Seiten hin über den Zentralabschnitt vorstehen, wobei der genannte Zentralabschnitt über die Verbindungsstreben mit einem in axialer Richtung betrachtet mittleren Abschnitt des Ringabschnitts bzw. äußeren Rahmenteils verbunden sein kann. Die Verbindungsstreben können insbesondere in axialer Richtung betrachtet etwa mittig an dem Ringabschnitt angelenkt sein.

Ist der Ringabschnitt in der beschriebenen Weise als Skelettstruktur, beispielsweise mäanderförmige Skelettstruktur ausgebildet, können die Verbindungsstreben an Stab- oder Knochenabschnitten der Skelettstruktur befestigt sein, die sich zumindest näherungsweise in Axialrichtung erstrecken und/oder einen Seitenschenkel der U-förmigen Einfassungen einer jeweiligen Ausnehmung bilden.

Erfindungsgemäß ist das Zwischenstück derart konturiert , dass zumindest im Wesentlichen alleine der Zentralabschnitt kraftübertragend ist und/oder im Wesentlichen nur der Zentralabschnitt die kraftübertragende Stoßfläche des Zwischenstücks bildet, um die Wälzkörper in Umlaufrichtung auf Abstand zu halten.

Insbesondere können die Verbindungsstreben, die den genannten Zentralabschnitt mit dem Ring- oder äußeren Rahmenabschnitt des Zwischenstücks verbinden, so ausgebildet sein, dass sie ohne Kontakt zu den Wälzkörpern bleiben und/oder keine Kräfte in Laufrichtung zwischen den Wälzkörpern übertragen.

Beispielsweise können die genannten Verbindungsstreben als stabförmige Speichen ausgebildet sein, die einerseits an dem Zentralabschnitt und andererseits an dem äußeren Rahmen- bzw. Ringabschnitt befestigt sind. Durch die speichenförmige Ausbildung der Verbindungsstreben wird auch in dem ringförmigen Bereich um den Zentralabschnitt herum viel Platz zur Aufnahme von Schmierstoff geschaffen. Gleichzeitig kann der Ablagerung von altem, verbrauchten Schmierstoff entgegengewirkt werden.

Der genannte Zentralabschnitt des Zwischenstücks, der die in Laufrichtung kraftübertragende Kontaktstelle des Zwischenstücks bildet, kann im Vergleich zum Gesamtdurchmesser bzw. zur Gesamtdicke oder -breite des Zwischenstücks relativ klein dimensioniert sein. Beispielsweise kann der Zentralabschnitt eine Dicke oder Quererstreckung (quer zur Laufrichtung) von weniger als 50% oder weniger als 30% oder weniger als 20% des maximalen Durchmessers oder der maximalen Quererstreckung des Zwischenstücks betragen.

Die Erfindung wird nachfolgend anhand eines bevorzugten Ausführungsbeispiels und zugehörigen Zeichnungen näher erläutert. In den Zeichnungen zeigen:
- Fig. 1:: eine ausschnittsweise, freigeschnittene, perspektivische Darstellung eines Wälzlagers nach einem Ausführungsbeispiel der Erfindung, bei dem die kugelförmig ausgebildeten Wälzkörper durch Zwischenstücke auf Abstand gehalten werden,
- Fig. 2:: eine perspektivische Darstellung eines Zwischenstücks des Wälzlagers aus Fig. 1 nach einem vorteilhaften Ausführungsbeispiel der Erfindung,
- Fig. 3:: eine Seitenansicht des Zwischenstücks aus Fig. 1, die die mäandernde Skelettform des äußeren Ringabschnitts des Zwischenstücks zeigt,
- Fig. 4:: eine stirnseitige Draufsicht auf das Zwischenstück aus den vorhergehenden Figuren, die die speichenförmigen Verbindungsstreben zwischen dem Zentralabschnitt und dem äußeren Ringabschnitt zeigt, und
- Fig. 5:: eine Schnittansicht des Zwischenstücks entlang der Linie A-A in Fig. 4.

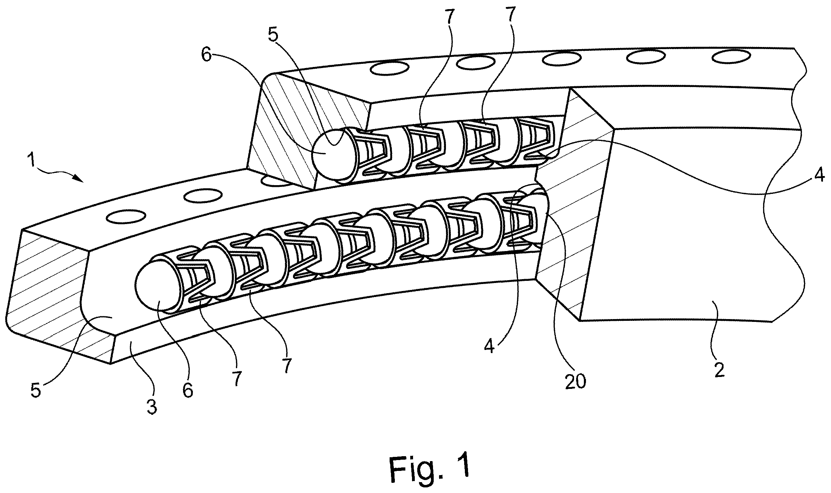

Wie Figur 1 zeigt, kann das Wälzlager 1 als Drehlager beispielsweise in Form eines mittenfreien Großwälzlagers ausgebildet sein und zwei Lagerringe 2, 3 beispielsweise in Form eines Innen- und eines Außenrings aufweisen, wobei das Lager als Axiallager oder als Radiallager oder auch als Mischform ausgebildet sein kann, die sowohl Axialkräfte als auch Radialkräfte abstützt.

Bei Ausbildung als Linearlager können anstelle der beiden in Figur 1 gezeigten Lagerringe 2, 3 auch entsprechende Lagerbahnkörper vorgesehen sein, die sich dann linear erstrecken und beispielsweise schienenartig ausgebildet sein können.

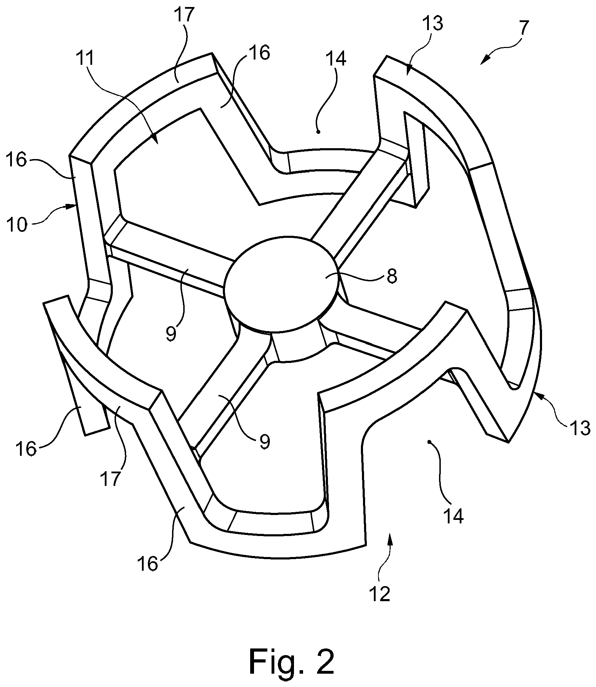

Wie Figur 2 zeigt, kann das Wälzlager 1 zwei Lagerreihen umfassen, die beispielsweise auf gegenüberliegenden Seiten einer Ringnase angeordnet sein können, mit der der eine Lagerring 2 in eine Nut im anderen Lagerring 3 eingreifen kann. Das Wälzlager 1 kann aber auch nur eine Wälzlagerreihe oder auch mehr als zwei Wälzlagerreihen umfassen, wobei Axial- und Radialreihen miteinander kombiniert oder auch einzeln vorgesehen sein können.

Die Lagerringe 2, 3 können dabei für jede Wälzkörperreihe jeweils eine Laufbahn 4 bzw. 5 aufweisen, die einander zugewandt sind und durch eine Reihe von Wälzkörpern 6 gegeneinander abgestützt sind, die auf den genannten Laufbahnen 4 und 5 abwälzen.

Wie Figur 1 zeigt, können die Wälzkörper 6 beispielsweise kugelförmig ausgebildet sein. Dementsprechend können die Laufbahnen 4 und 5 jeweils schalen- bzw. halbschalenförmig gekrümmt ausgebildet sein, um sich an die kugelförmigen Wälzkörper 6 anzuschmiegen. Alternativ können auch teilschalenförmige Laufbahnen vorgesehen sein, in denen die Wälzkörper 6 laufen, wenn das Lager als Mehrpunktlager, beispielsweise Vierpunktlager, ausgebildet ist. Es versteht sich jedoch, dass auch andere Wälzkörper, beispielsweise zylindrische oder tonnenförmige Wälzkörper vorgesehen und die Laufbahnen 4 und 5 dann in entsprechend anderer Weise an die Wälzkörper 6 angepasst sein können.

Zwischen den Wälzkörpern 6 sind Zwischenstücke 7 angeordnet, die die Wälzkörper 6 auf Abstand halten und für eine gleichmäßige Verteilung der Wälzkörper 6 entlang der Laufbahnen 4, 5 sorgen. Dabei kann zwischen jeweils zwei benachbarten Wälzkörpern 6 ein Zwischenstück 7 vorgesehen sein.

Die genannten Zwischenstücke 7 können voneinander separat bzw. unverbunden ausgebildet sein.

Wie Figur 2 zeigt, besitzen die Zwischenstücke 7 jeweils eine skelettartige Struktur, die sowohl in Laufrichtung als auch quer zur Laufrichtung Durchbrüche umfassen kann. Durch das Fehlen geschlossener Querschnitte in axialer Richtung und/oder in radialer Richtung kann Schmierstoff ausgetauscht bzw. an den Zwischenstücken 7 vorbei nachgeliefert werden und Ablagerung alten, verbrauchten Schmierstoffs im Bereich der Zwischenstücke vermieden werden.

Wie die Figuren 2 bis 5 zeigen, umfasst das Zwischenstück 7 einen Zentralabschnitt 8, der durch Verbindungsstreben 9 mit einem äußeren Rahmenteil 10 verbunden ist, das ringförmig ausgebildet sein und den Zentralabschnitt 8 umgeben kann.

Der genannte Zentralabschnitt 8 bildet die in Laufrichtung der Wälzlagerreihe kraftübertragenden Stoßflächen, die die jeweils benachbarten Wälzkörper 6 auf Abstand halten bzw. gegen die die genannten Wälzkörper 6 anstoßen können.

Der äußere, im Durchmesser bzw. der Quererstreckung deutlich größere Rahmenteil 10 hält den Zentralabschnitt 8 in Position und bewahrt den genannten Zentralabschnitt 8 vor dem Verkippen. Hierzu kann der genannte Rahmenteil 10 die auf Abstand gehaltenen, benachbarten Wälzkörper 6 ein Stück weit übergreifen, um sich ggf. abstützen zu können.

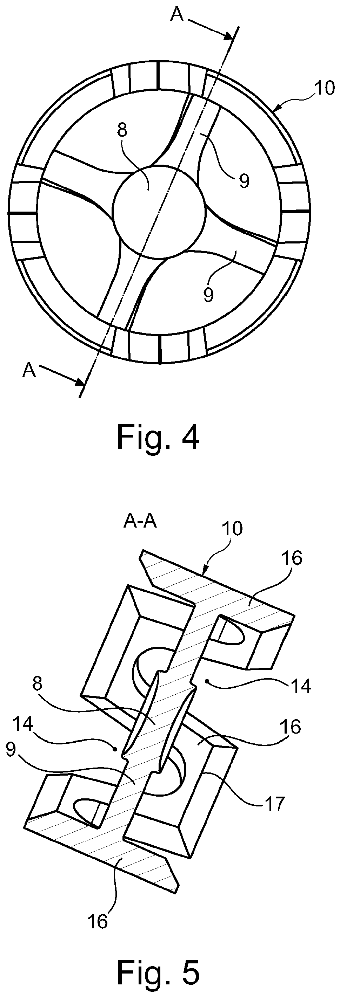

Insbesondere kann das Zwischenstück 7 zu gegenüberliegenden Stirnseiten hin Aufnahmeräume 11, 12 besitzen, vgl. Figur 5, die die auf Abstand gehaltenen Wälzkörper 6 ein Stück weit in den vom Rahmenteil 10 umschlossenen Raum bzw. in den Zwischenstückkorpus eintauchen lassen. Die stirnseitigen Ränder 13 des Rahmenteils 10 können in ihrem Durchmesser bzw. in ihrer lichten Weite auf die Kontur des Wälzkörpers 6 soweit abgestimmt sein, dass die auf Abstand gehaltenen Wälzkörper 6 den Rahmenteil 10 gegen Verkippen abstützen können.

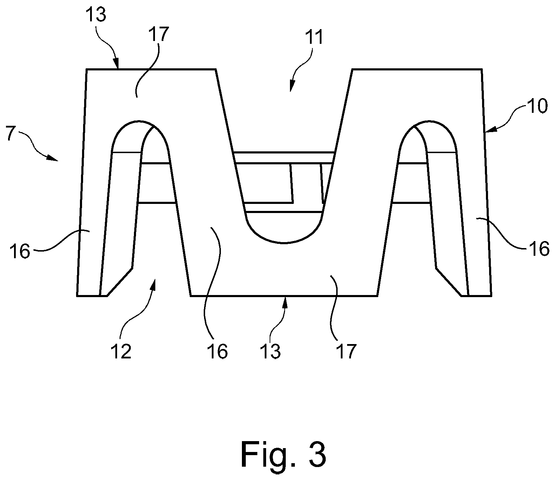

Wie die Figuren 2 und 3 zeigen, ist der äußere Rahmenteil 10 mit Ausnehmungen 14 versehen und besitzt eine Stab- oder Skelettstruktur, die von den genannten Ausnehmungen 14 durchsetzt ist. Insbesondere kann die genannte Skelettstruktur des Rahmenteils 10 von länglichen, stab- oder knochenartigen Streben 16 und 17 gebildet sein, die ketten- bzw. polygonzugartig miteinander verbunden sind und insgesamt eine mäanderförmige Skelettstruktur bilden, die sich in Umfangsrichtung des Zwischenstücks 7 bzw. um den Zentralabschnitt 8 herum erstreckt.

Die Skelettstruktur des Rahmenteils 10 kann insbesondere Längsstreben 16 umfassen, die in Umfangsrichtung verteilt voneinander beabstandet angeordnet und durch Querstreben 17 miteinander paarweise verbunden sind. Die genannten Längsstreben 16 können sich näherungsweise in Laufrichtung oder spitzwinklig dazu geneigt erstrecken, während sich die genannten Querstreben 17 im Wesentlichen quer zur Laufrichtung der Wälzkörperreihe erstrecken.

Ein Paar benachbarter Längsstreben 16 kann zusammen mit einer die beiden Längsstreben 16 verbindenden Querstrebe 17 einen U-förmigen Rahmen bilden, der eine Ausnehmung 14 einfasst.

Die genannten Ausnehmungen 14 können jeweils zu einer Axialseite hin offen sein, wobei vorteilhafterweise wechselweise nach vorne und nach hinten offene Ausnehmungen 14 vorgesehen sein können, sodass das Zwischenstück 7 zu jeder Axialseite hin offene Ausnehmungen 14 umfasst. Insbesondere kann dabei in Umfangsrichtung des Zwischenstücks 7 betrachtet eine zu einer ersten Axialseite hin offene Ausnehmung 14 mit einer zur gegenüberliegenden Axialseite hin offenen Ausnehmung 14 abwechseln. Einander benachbarte Ausnehmungen 14 blicken mit ihren Öffnungen zu gegenüberliegenden Seiten hin.

Entsprechend dem mäanderförmigen Verlauf der Skelettstruktur des Rahmenteils 10 sind die Querstreben 17 abwechselnd an gegenüberliegenden Randabschnitten des Rahmenteils 10 angeordnet, also in Laufrichtung betrachtet einmal an einem vorderen Randabschnitt und einmal an einem hinteren Randabschnitt, vgl. Figur 3.

Durch die skelettartige, insbesondere mäanderförmige Ausbildung des Rahmenteils 10 besitzt der Rahmenteil 10 eine formbedingte konstruktive Elastizität, insbesondere durch Biegung bzw. Verformung der als Gelenke fungierenden Verbindungsabschnitte zwischen den Längs- und Querstreben 16, 17.

Die Verbindungsstreben 9, die den Zentralabschnitt 8 mit dem Rahmenteil 10 verbinden, können vorteilhafterweise in Form von etwa stabförmigen Speichen ausgebildet sein, die einen zumindest näherungsweise geraden Verlauf haben können. Insbesondere können sich die genannten speichenförmigen Verbindungsstreben 9 in einer Radialebene quer zur Laufrichtung der Wälzkörperreihe erstrecken.

Die Verbindungsstreben 9 können sich radial erstrecken, vgl. Figur 4. Unabhängig hiervon können 2 bis 8 oder 3 bis 6 oder 4 bis 5, beispielsweise 4 Speichen vorgesehen sein. Dies ist ausreichend, um den Rahmenteil 10 mit dem Zentralabschnitt 8 ausreichend stabil zu verbinden und schafft gleichzeitig Platz für die Aufnahme von Schmierstoff.

Wie Figur 4 zeigt, kann die Ringfläche zwischen dem Zentralabschnitt 8 und dem Rahmenteil 10, die von den Verbindungsstreben 9 überbrückt wird, relativ große Durchbrüche bzw. materialfreie Bereiche umfassen. Beispielsweise können die Verbindungsstreben 9 weniger als 50% oder weniger als 30% der genannten Ringfläche ausmachen. Mit anderen Worten sind in Laufrichtung betrachtet flächenmä-ßig mehr Durchbrüche als Speichen vorgesehen.

Die Verbindungsstreben 9 können vorteilhafterweise derart beschaffen sein, dass sie mit den Wälzkörpern 6 nicht in Kontakt treten. Beispielsweise kann der Zentralabschnitt 8 mit seinen gegenüberliegenden Stoßflächen 18, 19 in Laufrichtung bzw. gegen die Laufrichtung über die genannten Verbindungsstreben 9 vorstehen. Betrachtet man zwei - hypothetische - parallele Ebenen, die an den gegenüberliegenden Stoßflächen 18 und 19 anstehen und sich senkrecht zur Laufrichtung der Wälzkörperreihe erstrecken, können sich die genannten Verbindungsstreben 9 in dem Zwischenraum zwischen den beiden gedachten Ebenen erstrecken, vgl. Figur 5.

Die Verbindungsstreben 9 können in Laufrichtung der Wälzkörperreihe betrachtet dünner ausgebildet sein als der Zentralabschnitt 8, vgl. Figur 5.

Die Verbindungsstreben 9 können jeweils an einem Mittelabschnitt des Rahmenteils 10 befestigt sein, sodass der Rahmenteil 10 zu gegenüberliegenden Seiten hin etwa gleichweit gegenüber den Verbindungsstreben 9 vorsteht. Insbesondere können die Verbindungsstreben 9 jeweils etwa mittig an Längsstreben 16 angelenkt sein, vgl. Figur 2 und Figur 5.

## Patentansprüche

1. Wälzlager mit zwei konzentrischen Laufringen (2, 3), zwischen denen in einem Lagerspalt (20) eine Vielzahl von Wälzkörpern (6) vorgesehen sind, die auf zumindest zwei Laufbahnen (4, 5) abwälzen, wobei zwischen den Wälzkörpern (6) Zwischenstücke (7) vorgesehen sind, die die Wälzkörper (6) voneinander beabstandet halten, wobei die Zwischenstücke (7) jeweils einen Zentralabschnitt (8) umfassen, der mit einem äußeren, den Zentralabschnitt (8) umgebenden Rahmenteil (10) über Verbindungsstreben (9) verbunden ist, **dadurch gekennzeichnet, dass** der Zentralabschnitt (8) in Laufrichtung der Wälzkörperreihe alleine kraftübertragend zwischen den auf Abstand zu haltenden Wälzkörpern (6) ausgebildet ist und/oder die Stoßflächen, die benachbarte Wälzkörper (6) auf Abstand halten, alleine an dem genannten Zentralabschnitt (8) ausgebildet sind.

2. Wälzlager nach dem vorhergehenden Anspruch, wobei der Rahmenteil (10) als Stab- oder Skelettstruktur mit fenster- und/oder türbogenartigen Ausnehmungen (14) ausgebildet ist, wobei die Ausnehmungen (14) jeweils zu einer Stirnseite des Zwischenstücks (7) hin offen ausgebildet und von einem U-förmigen Rahmenteil, insbesondere einem U-förmigen Stegrahmen, eingefasst sind.

3. Wälzlager nach dem vorhergehenden Anspruch, wobei die Ausnehmungen (14) abwechselnd zu gegenüberliegenden Stirnseiten des Zwischenstücks (7) hin offen sind und von Rahmenstreben (16, 17) eingefasst sind, die eine in Umfangsrichtung des Zwischenstücks (7) mäanderförmige Skelettstruktur bilden.

4. Wälzlager nach einem der vorhergehenden Ansprüche 2 oder 3, wobei der Rahmenteil (10) ringförmig den Zentralabschnitt (8) umgibt und/oder eine zylindrische, insbesondere kreiszylindrische Hüllkontur besitzt.

5. Wälzlager nach einem der vorhergehenden Ansprüche 2 bis 4, wobei die Materialabschnitte des Rahmenteils (10) zwischen den Ausnehmungen (14) weniger als 50% oder weniger als 30% der ringförmigen Hüllfläche des Rahmenteils (10) bilden, die umfangsseitig den Rahmenteil (10) einschließlich der Ausnehmungen (14) umschließt.

6. Wälzlager nach einem der vorhergehenden Ansprüche 2 bis 5, wobei die Skelettstruktur des Rahmenteils (10) aus im Wesentlichen gleichbleibend dünnen stab- oder knochenförmigen Streben (16, 17) besteht, die miteinander verbunden sind.

7. Wälzlager nach dem vorhergehenden Anspruch, wobei die stab- oder knochenförmigen Streben (16, 17) der Skelettstruktur abwechselnd Längsstreben (16) und Querstreben (17) umfassen.

8. Wälzlager nach einem der vorhergehenden Ansprüche 2-7, wobei der Rahmenteil (10) zu beiden Stirnseiten des Zwischenstücks (7) hin über den Zentralabschnitt (8) vorsteht und/oder in Laufrichtung der Wälzkörperreihe eine Länge besitzt, die mehr als doppelt so groß als die Länge des Zentralabschnitts (18) ist.

9. Wälzlager nach einem der vorhergehenden Ansprüche 2-8, wobei die Verbindungsstreben (9) zwischen Zentralabschnitt (8) und Rahmenteil (10) mit einem Mittelabschnitt des Rahmenteils (10) zwischen dessen stirnseitigen Rändern verbunden sind und/oder sich in einer gemeinsamen Ebene senkrecht zur Laufrichtung der Wälzkörperreihe erstrecken.

10. Wälzlager nach einem der vorhergehenden Ansprüche 2-9, wobei die Verbindungsstreben (9) zwischen dem Zentralabschnitt (8) und dem Rahmenteil (10) als stabförmige Speichen ausgebildet sind.

11. Wälzlager nach einem der vorhergehenden Ansprüche 2-10 wobei die Verbindungsstreben (9) in Laufrichtung der Wälzkörperreihe dünner ausgebildet sind als der Zentralabschnitt (8).

12. Wälzlager nach einem der vorhergehenden Ansprüche, wobei die Verbindungsstreben (9) zwischen dem Zentralabschnitt (8) und dem Rahmenteil (10) kontaktfrei von den Wälzkörpern (6) ausgebildet sind.

13. Wälzlager nach einem der vorhergehenden Ansprüche, wobei eine Ringfläche zwischen dem Zentralabschnitt (8) und dem Rahmenteil (10), die von den Verbindungsstreben (9) überbrückt wird, zu weniger als 50% oder weniger als 30% von den Verbindungsstreben (9) gebildet ist und zu mehr als 50% oder mehr als 70% aus Durchbrüchen besteht.

14. Wälzlager nach einem der vorhergehenden Ansprüche, das als mittenfreies Großwälzlager mit einem Durchmesser von mehr als 0,5 m oder mehr als 1 m ausgebildet ist.

## Claims

1. A rolling bearing having two concentric raceways (2, 3), between which there are provided, in a bearing gap (20), a plurality of rolling bodies (6) which roll on at least two tracks (4, 5), wherein intermediate pieces (7) which keep the rolling bodies (6) spaced apart from one another are provided between the rolling bodies (6), wherein the intermediate pieces (7) each comprise a central portion (8) which is connected via connecting struts (9) to an outer frame part (10) surrounding the central portion (8), **characterized in that** the central portion (8) in the direction of running of the rolling body row is formed individually to transmit force between the rolling bodies (6) that are to be kept spaced apart and/or the abutment surfaces that keep adjacent rolling bodies (6) spaced apart are formed individually on said central portion (8).

2. The rolling bearing according to the preceding claim, wherein the frame part (10) takes the form of a bar structure or skeleton structure with window-like and/or door arch-like cutouts (14), wherein the cutouts (14) are each formed to be open towards an end face of the intermediate piece (7) and are encompassed by a U-shaped frame part, in particular a U-shaped web frame.

3. The rolling bearing according to the preceding claim, wherein the cutouts (14) are alternately open towards opposite end faces of the intermediate piece (7) and are encompassed by frame struts (16, 17) forming a meandering skeletal structure in the circumferential direction of the intermediate piece (7).

4. The rolling bearing according to any of the preceding claims 2 or 3, wherein the frame part (10) annularly surrounds the central portion (8) and/or has a cylindrical, in particular a circularly cylindrical casing contour.

5. The rolling bearing according to any of the preceding claims 2 to 4, wherein the material portions of the frame part (10) between the cutouts (14) form less than 50% or less than 30% of the annular enveloping surface of the frame part (10) circumferentially enclosing the frame part (10) including the cutouts (14).

6. The rolling bearing according to any of the preceding claims 2 to 5, wherein the skeleton structure of the frame part (10) consists of substantially uniformly thin bar-shaped or bone-shaped struts (16, 17) which are connected to one another.

7. The rolling bearing according to the preceding claim, wherein the bar-shaped or bone-shaped struts (16, 17) of the skeleton structure comprise alternating longitudinal struts (16) and cross-struts (17).

8. The rolling bearing according to any of the preceding claims 2-7, wherein the frame part (10) projects outwardly beyond the central portion (8) towards both end faces of the intermediate piece (7) and/or has a length in the direction of running of the rolling body row which is more than twice the length of the central portion (18).

9. The rolling bearing according to any of the preceding claims 2-8, wherein the connecting struts (9) between the central portion (8) and the frame part (10) are connected to a middle portion of the frame part (10) between the end margins thereof and/or extend in a common plane perpendicular to the direction of running of the rolling body row.

10. The rolling bearing according to any of the preceding claims 2-9, wherein the connecting struts (9) between the central portion (8) and the frame part (10) take the form of bar-shaped spokes.

11. The rolling bearing according to any of the preceding claims 2-10, wherein the connecting struts (9) are formed thinner in the direction of running of the rolling body row than the central portion (8).

12. The rolling bearing according to any of the preceding claims, wherein the connecting struts (9) between the central portion (8) and the frame part (10) are formed free of contact with the rolling bodies (6).

13. The rolling bearing according to any of the preceding claims, wherein an annular area between the central portion (8) and the frame part (10) bridged by the connecting struts (9) is formed less than 50% or less than 30% by the connecting struts (9) and consists more than 50% or more than 70% of openings.

14. The rolling bearing according to any of the preceding claims, taking the form of an open centered large rolling bearing having a diameter greater than 0.5 m or greater than 1 m.

## Revendications

1. Palier à roulement avec deux bagues de roulement concentriques (2, 3), entre lesquelles sont prévus, dans un interstice de palier (20), une pluralité de corps de roulement (6) qui roulent sur au moins deux chemins de roulement (4, 5), des pièces intermédiaires (7) étant prévues entre les corps de roulement (6), lesquelles maintiennent les corps de roulement (6) à distance les uns des autres, les pièces intermédiaires (7) comprenant chacune une section centrale (8) qui est reliée à une partie de cadre extérieure (10) entourant la section centrale (8) par l'intermédiaire d'entretoises de liaison (9), **caractérisé en ce que** la section centrale (8) est réalisée seule dans la direction de roulement de la rangée de corps de roulement pour transmettre les forces entre les corps de roulement (6) à maintenir à distance et/ou les surfaces de butée qui maintiennent à distance des corps de roulement (6) voisins sont réalisées seules sur ladite section centrale (8).

2. Palier à roulement selon la revendication précédente, dans lequel la partie de cadre (10) est réalisée sous forme de structure de barre ou de squelette avec des évidements (14) de type fenêtre et/ou arc de porte, les évidements (14) étant réalisés chacun ouverts vers un côté frontal de la pièce intermédiaire (7) et étant bordés par une partie de cadre en forme de U, notamment un cadre à entretoise en forme de U.

3. Palier à roulement selon la revendication précédente, dans lequel les évidements (14) sont ouverts en alternance vers des côtés frontaux opposés de la pièce intermédiaire (7) et sont bordés par des entretoises de cadre (16, 17) qui forment une structure de squelette en forme de méandres dans la direction périphérique de la pièce intermédiaire (7).

4. Palier à roulement selon l'une quelconque des revendications 2 ou 3 précédentes, dans lequel la partie de cadre (10) entoure sous forme annulaire la section centrale (8) et/ou possède un contour d'enveloppe cylindrique, notamment cylindrique circulaire.

5. Palier à roulement selon l'une quelconque des revendications 2 à 4 précédentes, dans lequel les sections de matériau de la partie de cadre (10) entre les évidements (14) forment moins de 50 % ou moins de 30 % de la surface d'enveloppe annulaire de la partie de cadre (10) qui entoure la partie de cadre (10), y compris les évidements (14), sur la périphérie.

6. Palier à roulement selon l'une quelconque des revendications 2 à 5 précédentes, dans lequel la structure de squelette de la partie de cadre (10) est constituée d'entretoises (16, 17) en forme de barres ou d'os, d'épaisseur essentiellement constante, qui sont reliées entre elles.

7. Palier à roulement selon la revendication précédente, dans lequel les entretoises (16, 17) en forme de barre ou d'os de la structure de squelette comprennent des entretoises longitudinales (16) et des entretoises transversales (17) alternées.

8. Palier à roulement selon l'une quelconque des revendications 2 à 7 précédentes, dans lequel la partie de cadre (10) fait saillie au-delà de la section centrale (8) vers les deux côtés frontaux de la pièce intermédiaire (7) et/ou possède une longueur, dans la direction de roulement de la rangée de corps de roulement, qui est plus de deux fois supérieure à la longueur de la section centrale (18).

9. Palier à roulement selon l'une quelconque des revendications 2 à 8 précédentes, dans lequel les entretoises de liaison (9) entre la section centrale (8) et la partie de cadre (10) sont reliées à une section médiane de la partie de cadre (10) entre ses bords frontaux et/ou s'étendent dans un plan commun perpendiculairement à la direction de roulement de la rangée de corps de roulement.

10. Palier à roulement selon l'une quelconque des revendications 2 à 9 précédentes, dans lequel les entretoises de liaison (9) entre la section centrale (8) et la partie de cadre (10) sont réalisées sous forme de rayons en forme de barres.

11. Palier à roulement selon l'une quelconque des revendications 2 à 10 précédentes, dans lequel les entretoises de liaison (9) sont réalisées plus minces que la section centrale (8) dans la direction de roulement de la rangée de corps de roulement.

12. Palier à roulement selon l'une quelconque des revendications précédentes, dans lequel les entretoises de liaison (9) entre la section centrale (8) et la partie de châssis (10) sont réalisées sans contact avec les corps de roulement (6).

13. Palier à roulement selon l'une quelconque des revendications précédentes, dans lequel une surface annulaire entre la section centrale (8) et la partie de cadre (10), qui est pontée par les entretoises de liaison (9), est formée à moins de 50 % ou à moins de 30 % par les entretoises de liaison (9) et est constituée à plus de 50 % ou à plus de 70 % par des ajours.

14. Palier à roulement selon l'une quelconque des revendications précédentes, qui est réalisé sous forme de palier à roulement de grande dimension sans centre, d'un diamètre supérieur à 0,5 m ou supérieur à 1 m.
